(19) Europäisches Patentamt
European Patent Office
Office européen des brevets

(11) **EP 1 566 749 A1**

(12) **DEMANDE DE BREVET EUROPEEN**

(43) Date de publication:
**24.08.2005 Bulletin 2005/34**

(51) Int Cl.7: **G06F 17/30**

(21) Numéro de dépôt: **04290477.1**

(22) Date de dépôt: **23.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **Universite Pierre et Marie Curie D.R.I.T.T.**
**75005 Paris (FR)**

(72) Inventeur: **Delort, Jean-Yves**
**75014 Paris (FR)**

(74) Mandataire: **Laget, Jean-Loup**
**Cabinet Peuscet,**
**78, avenue Raymond Poincaré**
**75116 Paris (FR)**

(54) **Procédé d'aide à la recherche d'informations, programme et machine programmée associés**

(57) Procédé d'aide à la recherche d'information au cours d'une session de recherche de documents. La session consiste en une pluralité d'itérations, l'itération courante débutant par l'émission d'une requête par un utilisateur et la transmission d'une liste de références de documents par un système de recherche d'information. Le procédé comporte :

- l'enregistrement d'un document référencé dans la liste initiale et effectivement accédé par l'utilisateur dans un ensemble ;
- l'analyse du contenu textuel d'au moins un document sélectionné automatiquement dans ledit ensemble, pour définir une liste courante d'indices établis à partir de mots pertinents extraits des documents sélectionnés ;
- l'élaboration d'une recommandation courante d'indices à partir de ladite liste courante d'indices ; et,
- proposer à l'utilisateur la recommandation pour formuler une nouvelle requête.

FIG.2

Printed by Jouve, 75001 PARIS (FR)

**Description**

La présente invention se rapporte à un système de recherche d'information. Plus particulièrement, l'invention se rapporte à un système de recherche d'information adaptatif.

Un utilisateur à la recherche d'information doit être assisté dans ce travail par un système adaptatif. Par exemple, du fait de la quantité et de la variété de sources de données présentes sur l'Internet, un utilisateur à la recherche d'information doit être aidé dans sa navigation.

D'une manière générale, un système de recherche d'information (SRI) est un système composé d'une collection de documents formant un corpus, chaque document étant identifié par une référence. Un SRI dispose également d'une interface permettant d'effectuer des requêtes et de consulter des réponses. Une requête est l'expression, dans un langage compréhensible par le SRI, d'un besoin d'information exprimé par l'utilisateur. Une base de données, un catalogue électronique sont des exemples de SRI. De même un lien hypertexte peut être assimilé à un SRI car la sélection d'un lien peut être vue comme une requête.

Dans sa recherche d'information, l'utilisateur commence par formuler une première requête R1 au SRI qui la compare à tous les documents du corpus. L'extraction d'information désigne l'extraction des documents pertinents par le SRI.

Un premier problème se pose qui consiste à savoir quels sont les documents les plus pertinents relativement à une requête.

Dans une approche classique, le contenu textuel d'un document est d'abord filtré par exemple en retirant l'ensemble des mots appartenant à une liste d'arrêt constituée de mots n'ayant pas de sens en eux même (i.e. les mots tels que "et", "a", etc.) ou en prenant le radical des mots (par exemple en transformant "nationalisation" en "national"). Le contenu textuel filtré est ensuite analysé. Un travail d'indexation est réalisé consistant à déterminer pour un document donné une série de n index, chaque index correspondant par exemple à la fréquence d'apparition d'un mot dans ce document. L'information reliant la référence d'un document aux index est conservée dans une indexation inversée.

Plusieurs méthodes peuvent ensuite être utilisées pour mettre en correspondance une requête avec un document. Par exemple, la méthode vectorielle dans laquelle les documents et les requêtes sont représentés dans un espace à n dimensions (les n mots de la série d'index) où chaque dimension correspond à une entrée dans l'indexation inversée : soit $D=<d1, d2,..., dn>$ la représentation d'un document et $R= <rl, r2,..., rn>$ la représentation d'une requête, où les "coordonnées" correspondent à la fréquence d'occurrence du mot respectivement dans le document et dans la requête. La notion quantitative de pertinence du document par rapport à la requête est alors obtenue en calculant la valeur du produit scalaire entre le vecteur de requête et le vecteur document. D'autres modèles d'évaluation de la pertinence sont proposés dans Baeza-Yates, R. & Ribeiro-Neto, B. (1999) Modern information retrieval, ACM, New York.

Le SRI présente ensuite les références des documents les plus pertinents.

Le besoin d'information de l'utilisateur n'est pas totalement exprimé et figé dans la requête initiale R1. L'utilisateur peut redéfinir de manière volontaire ou involontaire le but, s'il en a un, de sa recherche au cours du processus de recherche. L'utilisateur effectue donc une deuxième requête R2. Pour affiner la recherche, le processus de recherche d'information se poursuit par boucles successives ou itérations jusqu'à ce que l'utilisateur ait satisfait son besoin d'information ou ait renoncé à poursuivre, ce qui détermine la fin d'une session de recherche.

Au cours d'une session de recherche, une requête est une reformulation de la ou des requête(s) précédente(s). La reformulation constitue un deuxième problème de la recherche d'information.

Dans les systèmes d'aide à la navigation centré sur le SRI, celui-ci reformule la requête initiale R1 en une nouvelle requête R2 afin de réaliser une nouvelle extraction d'information.

La technique de reformulation de requête consiste à déterminer les modifications, ajouts ou retrait de termes, à effectuer dans la requête initiale R1 afin d'améliorer la qualité des réponses présentées.

Actuellement, les méthodes de reformulation de requête présentes les moteurs de recherche sur l'Internet sont des méthodes semi-automatiques qui suggèrent à l'utilisateur des alternatives ou des recommandations. Par exemple, la recommandation consiste à proposer une correction orthographique d'un des termes de la requête initiale. Il s'agit simplement pour le SRI de comparer le terme de la requête avec une entrée dans un dictionnaire.

Pour reformuler une requête, une analyse globale s'appuyant sur les relations entre les documents du corpus peut être réalisée. Par exemple, les documents du corpus sont regroupés en fonction de la cooccurrence de termes. Pour chacun des groupes obtenus de documents, une liste de mot clé est établie. Il s'agit ensuite de comparer un terme de la requête avec les listes de mots clé définissant un groupe prédéfini de documents. La demande de brevet US2003/028512 décrit une approche statistique sur l'analyse textuelle des documents du corpus pour déterminer une liste de mots-clé qui sera présentée à l'utilisateur pour modifier sa recherche.

Encore une autre manière de déterminer une liste de mots permettant de modifier une requête initiale est présentée dans le brevet US 6 006 225. Les différentes requêtes sur le SRI sont enregistrées dans un fichier historique pendant plusieurs mois. L'analyse de ce fichier historique permet d'extraire la co-occurrence de termes dans les requêtes. Les mots proposés à l'utilisateur correspondent alors aux mots co-occurrents aux mots de la requête.

D'une manière générale, ces techniques globales ont pour défaut d'être très coûteuses en ressources de calcul et difficilement applicables au cas particulier de l'Internet.

Pour reformuler une requête, une analyse locale peut être utilisée. Elle consiste à obtenir un ou plusieurs "feedbacks" de l'utilisateur qui note les documents présentés dans la liste des résultats. Le SRI sélectionne alors des termes fréquents dans ces documents et augmente l'importance de ces termes dans la nouvelle requête. Une telle approche est présentée dans le brevet US 5 987 457. L'efficacité d'une telle méthode repose essentiellement sur la précision des feedbacks donnés par l'utilisateur qui n'est pas toujours enclin à effectuer ce travail.

Des développements théoriques récents cherchent à centrer leurs modèles non plus sur le SRI mais sur l'utilisateur dans le processus de classement des documents en fonction de la pertinence et dans le processus de reformulation de la requête. Mais, dans cette approche cognitive, les modèles développés sont complexes. Ils comportent un grand nombre de paramètres qui restent difficilement quantifiables et rendent les modèles correspondants inapplicables dans des cas pratiques.

Certaines méthodes mises en oeuvre sur l'Internet cherchent à prendre en compte le comportement de l'utilisateur. Le brevet US 6 606 624 décrit une approche collaborative dans laquelle un groupe de documents est défini par le comportement moyen d'une catégorie d'utilisateurs. Une recommandation est faite à l'utilisateur en fonction de son profil, c'est-à-dire du groupe auquel il appartient. L'utilisateur peut déclarer appartenir à tel ou tel groupe. L'utilisateur en fonction de son comportement de navigation à travers le site est perçu comme appartenant à tel ou tel groupe. On trouvera par exemple sur un site de vente en ligne l'expression, "ceux qui ont acheté le produit X ont également apprécié le produit Y".

Il apparaît donc que les problèmes de pertinence d'un document vis-à-vis du besoin d'information d'un utilisateur et de reformulations successives de ses requêtes sont des notions complexes difficiles à quantifier, qui dépendent non seulement du SRI mais également de l'utilisateur.

L'invention a pour but de proposer un procédé automatisé ou partiellement automatisé d'aide à la recherche d'information permettant de réduire le nombre de documents pertinents fournis par le système de recherche et/ou de requêtes fournies par le terminal utilisateur en vue de minimiser les temps d'occupation machine.

L'invention a pour objet un procédé automatisé d'aide à la recherche d'information mis en oeuvre au cours d'une session de recherche de documents dans le corpus d'un système de recherche d'information, la session consistant en une pluralité d'itérations, l'itération courante débutant par une émission d'une requête courante par un utilisateur et la transmission d'une liste initiale courante d'au moins une référence de documents pertinents par le système de recherche d'information en réponse à la requête courante, le procédé étant caractérisé en ce qu'il comporte les étapes consistant à :

- enregistrer un document référencé dans la liste initiale courante et effectivement accédé par l'utilisateur, le document accédé étant enregistré dans un ensemble de documents accédés au cours de la session ;
- analyser le contenu textuel d'au moins un document sélectionné automatiquement dans l'ensemble de documents accédés au cours de la session, pour définir une liste courante d'indices établis à partir de mots pertinents extraits de ou des documents accédés ;
- élaborer une recommandation courante d'indices à partir de la liste courante d'indices ; et,
- proposer à l'utilisateur la recommandation courante pour formuler une nouvelle requête à partir de la requête courante.

Le procédé d'aide à la recherche d'information selon l'invention consiste à se tourner vers les signes d'intérêt implicites, dénommés indices, qui sont présents dans le contenu des documents accédés par l'utilisateur. A la lecture de la référence d'un document pertinent, constituée d'un lien vers ce document d'un résumé du document d'un score évalué par le système de recherche d'information ou l'équivalent, le fait qu'un utilisateur décide d'aller voir ce document est un signe implicite selon lequel le document va dans la direction du besoin d'information de l'utilisateur. L'ensemble des documents accédés au cours de la session est donc analysé pour déterminer une liste d'indices constituée par des mots pertinents des termes ou l'équivalent contenus dans les documents de base.

De préférence, l'étape d'analyse du contenu textuel est effectuée sur au plus a documents sélectionnés qui correspondent aux a documents chronologiquement accédés en dernier par l'utilisateur au cours de la session, le nombre a étant un paramètre entier prédéterminé.

L'analyse du contenu des documents effectivement accédés se fait sur un historique ayant une profondeur prédéfinie.

De préférence encore, l'étape d'analyse du contenu textuel d'au moins un document sélectionné consiste à :

- calculer un poids pour chacun des mots d'un lexique, le lexique étant l'ensemble des mots pertinents apparaissant dans l'ensemble de documents accédés ; et,

- ordonner la liste courante d'indices selon le poids de chacun des mots pertinents la constituant, l'étape d'élaboration de la recommandation courante se faisant par sélection des b mots pertinents de poids le plus élevé de la liste courante d'indices ayant, le nombre b étant un paramètre entier prédéterminé.

De préférence, l'étape d'enregistrement d'un document accédé comporte les étapes consistant à :

- filtrer le contenu textuel du document accédé en éliminant les termes d'une liste d'arrêt prédéfinie, pour ne retenir que des mots pertinents ;
- associer au document accédé un vecteur document dont les coordonnées correspondent respectivement à la fréquence d'occurrence de chaque mot pertinent dans le document accédé ;
- empiler le vecteur document obtenu dans l'ensemble de documents accédés au cours de la session, l'ensemble ayant alors la forme d'un tableau de documents accédés.

Dans un mode de réalisation préféré, le poids H d'un mot pertinent est calculé en tenant compte d'une première fréquence F1 du mot pertinent correspondant au nombre des documents sélectionnés dans lesquels est présent le mot pertinent, et d'une deuxième fréquence F2 du mot pertinent correspondant à la somme sur l'ensemble des documents sélectionnés de la fréquence d'occurrences du mots pertinent.

De préférence, le poids d'un mot pertinent est calculé selon la formule :

$$H = F_1^2 \times F_2.$$

De préférence, le procédé comporte les étapes consistant à :

- enregistrer la recommandation courante dans un tableau de recommandations faites au cours de la session ; et,
- analyser au moins une recommandation sélectionnée dans le tableau de recommandations pour produire une liste d'indices inusités,

et en ce que l'étape d'élaboration d'une recommandation courante d'indices comporte une première étape élémentaire de soustraction des mots pertinents appartenant à la liste d'indices inusités de la liste courante d'indices.

L'historique des recommandations est pris en compte pour la détermination de la recommandation courante.

De préférence, l'étape d'analyse d'au moins une recommandation sélectionnée consiste d'abord à calculer, pour chacun des indices de l'ensemble des recommandations sélectionnées, une troisième fréquence F3 correspondant à la fréquence d'occurrences dudit indice dans l'ensemble des recommandations sélectionnées, puis ensuite à supprimer les indices dont la valeur de la troisième fréquence est supérieure à un seuil prédéterminé, de préférence de 50%.

De préférence encore, l'étape d'analyse consiste à sélectionner au plus les c recommandations effectuées chronologiquement en dernier, le nombre c étant un paramètre entier prédéfini.

Dans le mode de réalisation préféré, le procédé comporte les étapes consistant à :

- enregistrer la requête courante dans un ensemble de requêtes au cours de la session ; et,
- analyser au moins une requête sélectionnée dans l'ensemble de requêtes pour produire une liste d'indices usités,

et en ce que l'étape d'élaboration d'une recommandation courante d'indices comporte une deuxième étape élémentaire de soustraction des mots pertinents appartenant à la liste d'indices usités de la liste courante.

L'historique des requêtes est également pris en compte dans le procédé de détermination de la recommandation courante.

De préférence, l'étape d'analyse d'au moins une requêtes sélectionnée consiste à sélectionner au plus les d requêtes effectuées chronologiquement en dernier, le nombre d étant un paramètre entier prédéfini.

De préférence, l'étape d'enregistrement de la requête courante consiste à :

- associer à ladite requête un vecteur requête dont chaque coordonnée correspond à la fréquence d'occurrence d'un mot pertinent du lexique dans la requête ;
- empiler le vecteur requête obtenu dans l'ensemble de requêtes au cours de la session, l'ensemble ayant alors la forme d'un tableau de requête.

De préférence, le procédé comporte une étape d'identification de l'utilisateur à chaque événement utilisateur parmi l'émission d'une requête courante et l'accès à un document pertinent de la liste courante de référence.

Ceci permet de suivre un utilisateur à travers la totalité de sa session de recherche et de construire les différents historiques.

Dans le mode de réalisation actuellement préféré, le procédé comporte une étape de détection de fin de session, consistant à compter un nombre de mots communs des e dernières requêtes de l'ensemble de requêtes au cours de la session, le nombre e étant un paramètre entier prédéfini, la fin de session correspondant à un nombre de mots communs nul.

Si l'utilisateur ne rencontre pas son besoin d'information, il peut être amené à changer du tout au tout le but de sa recherche. Cela n'a donc plus de sens de lui proposer une recommandation sur la base de l'historique de sa recherche.

L'invention a également pour objet un logiciel d'aide à la recherche d'informations contenant des codes d'instruction propres à être lus et stockés sur un support, les codes étant exécutables par un ordinateur hôte, le logiciel étant caractérisé en ce qu'il met en oeuvre le procédé ci-dessus.

De préférence, le logiciel comporte un module de communication apte à échanger des données avec un programme de navigation, l'ordinateur hôte étant un terminal utilisateur exécutant le programme de navigation pour communiquer avec un système de recherche d'information distant.

De préférence, le logiciel comporte un module de communication apte à échanger des données avec un terminal utilisateur distant, l'ordinateur hôte étant un système de recherche d'information.

De préférence, le logiciel comporte un premier module de communication apte à échanger des données avec un système de recherche d'information distant et un deuxième module de communication apte à échanger des données avec un terminal utilisateur distant, l'ordinateur hôte étant un serveur intermédiaire.

De préférence encore, le logiciel comporte :

- un moyen de transcription des références initiales de la liste initiale qui pointent vers des documents pertinents, la liste courante étant émise par le système de recherche d'information en réponse à une requête courante émise par le terminal utilisateur, pour générer une liste secondaire dont les références secondaires pointent vers l'ordinateur hôte et possèdent en argument la référence initiale ; et,
- un moyen de transcription inverse apte à décrypter la référence secondaire pour en extraire la référence initiale.

De préférence, le logiciel comporte un moyen de notification de redirection apte, lorsque l'ordinateur hôte reçoit une demande de chargement d'un document en provenance d'un terminal utilisateur via la référence secondaire d'un du document, à rediriger le terminal utilisateur vers la référence initiale du document.

L'invention a également pour objet une machine programmée comportant un calculateur et un espace mémoire apte à exécuter les instructions d'un programme stocké dans l'espace mémoire, la machine étant caractérisée en ce qu'elle est programmée au moyen d'un logiciel d'aide à la recherche d'information selon le logiciel ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

- la figure 1 est une présentation schématique d'une architecture informatique possible de mise en oeuvre du procédé selon l'invention ;
- la figure 2 représente schématiquement la succession temporelle des communications entre les ordinateurs de l'architecture de la figure 1 ;
- la figure 3 représente de manière schématique les différents modules et sous-modules du logiciel permettant la mise en oeuvre du procédé ;
- la figure 4 représente les données du profil d'un utilisateur ;
- la figure 5 est un schéma blocs du module principal du logiciel de la figure 3 ;
- la figure 6 est un schéma blocs d'un sous-module de génération de recommandation lors de l'émission d'une nouvelle requête ;
- la figure 7 est un schéma blocs d'un sous-module de génération de recommandation lors de l'accès à un nouveau document ;
- la figure 8 est un schéma blocs détaillé d'un sous-module d'extraction des indices d'un document accédé représenté à la figure 7; et,
- la figure 9 est un schéma bloc du sous-module de mise à jour de la recommandation courante dans le profil utilisateur.

Le procédé d'aide à la recherche d'informations selon la présente invention va maintenant être décrit en détail. Dans le mode de réalisation actuellement préféré, le procédé est mis en oeuvre par un programme informatique exécuté par un ordinateur.

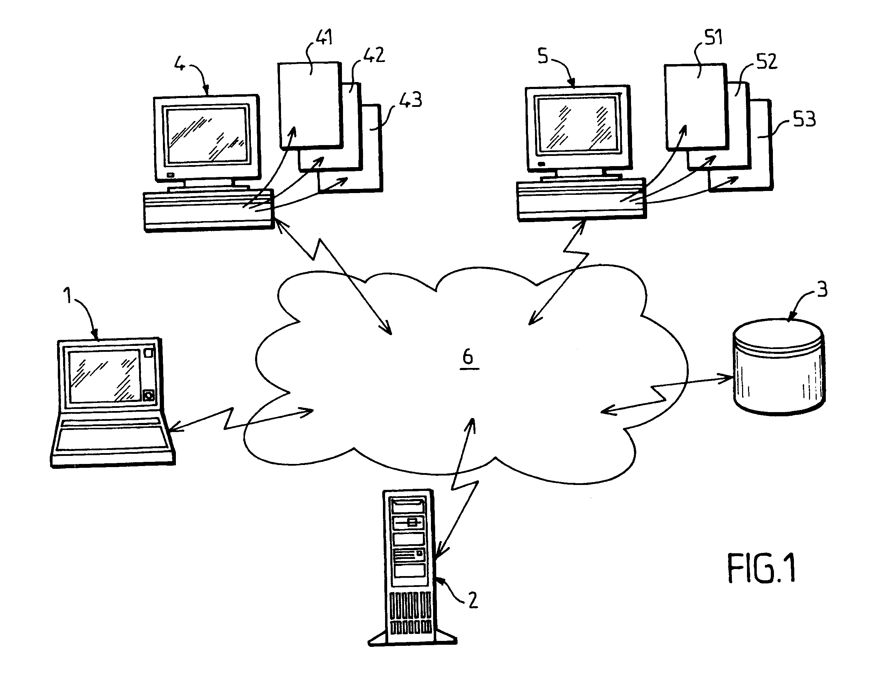

La figure 1 représente de manière schématique une architecture possible. Sur la figure 1, on a représenté un terminal utilisateur 1, un serveur intermédiaire 2, un système de recherche d'informations (SRI) 3, un serveur 4 apte à servir les pages 41, 42, 43 d'un premier site et un deuxième serveur 5 apte à servir les pages 51, 52, 53 d'un deuxième site. La communication entre les différents ordinateurs se fait au travers d'un réseau 6. Le réseau de communications 6 est par exemple un réseau internet.

Dans le mode de réalisation décrit en détail, le programme selon l'invention est exécuté par l'ordinateur intermédiaire 2.

Le SRI 3 comporte une base de données constituée de références aux pages accessibles sur l'Internet et en particulier aux pages 41, 42, 43 du premier site et aux pages 51, 52, 53 du deuxième site. Dans la suite, ces différentes pages accessibles sont appelées "documents".

Par ailleurs, le SRI 3 comporte un moteur de recherche interfacé avec le réseau Internet apte à recevoir une requête par un ordinateur et, en réponse, de générer puis d'émettre vers l'ordinateur requêteur une liste de références de documents pertinents.

Trois types de page peuvent être accédés par l'utilisateur :

- Un premier type de page permet à l'utilisateur de formuler une requête en direction du SRI.
- Un deuxième type de page est constitué par la liste des références des documents pertinent résultat de la recherche effectuée par le SRI. Chaque référence de la liste contient par exemple un lien, ou URL, pointant vers un document, un résumé du document et un score de pertinence du document vis-à-vis de la requête. Une page du premier type peut également comporter les éléments d'une page du premier type : par exemple un cadre permettant de formuler une requête
- Un troisième type de page est constitué par l'affichage du contenu textuel du document accédé par l'utilisateur. Une page du troisième type est toujours accédée à la suite d'une sélection sur l'un des liens d'une page du deuxième type.

D'une manière générale, le procédé selon l'invention consiste à analyser les documents effectivement accédés par l'utilisateur au cours d'une session de recherche afin de déterminer une recommandation comportant plusieurs indices permettant à l'utilisateur de reformuler sa recherche.

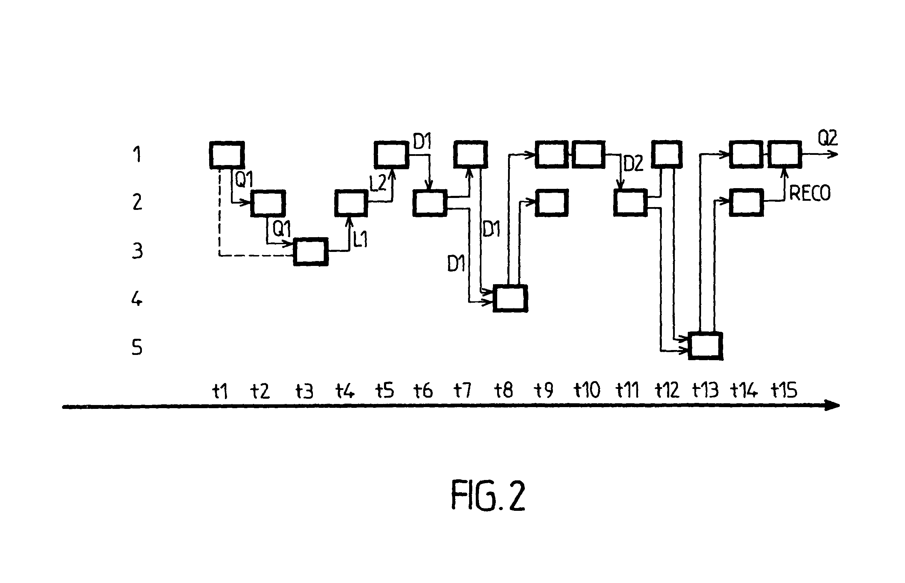

Sur la figure 2, les différentes étapes d'une itération d'une session de recherche sont présentées schématiquement au cours du temps.

A l'instant t1, le terminal utilisateur 1 émet une requête Q1 en direction, pense-t-il, du SRI 3 (traits pointillés). En fait, Q1 est émise en direction du serveur intermédiaire 2. L'émission de la requête détermine le début de l'itération. La requête Q1 est la requête courante.

En plus de la requête Q1, le terminal utilisateur 1 transmet un identifiant ID au serveur intermédiaire 2. Cet identifiant va permettre de suivre l'utilisateur au cours de la session de recherche.

A l'instant t2, le serveur intermédiaire 2 réémet la requête Q1 en direction du SRI 3.

A l'instant t3, le SRI 3 reçoit la requête Q1. Il émet en réponse une liste initiale courante L1 de références de documents pertinents en direction du serveur intermédiaire 2. En effet, pour le SRI 3, c'est bien le serveur intermédiaire 2 qui a émis la requête courante Q1. La liste initiale L1 comporte une série de références initiales pointant vers les différents documents pertinents. Par exemple la liste L1 contient un lien URL pointant vers le serveur 4 lorsque par exemple la page 42 est considérée comme un document pertinent relativement à la requête Q1.

A l'instant t4, le serveur intermédiaire 2 recevant la liste initiale L1 transcrit l'ensemble des références initiales afin de produire une liste secondaire courante L2 de références secondaires. Les liens URL' de la liste secondaire L2 pointent maintenant vers le serveur intermédiaire 2 et non plus vers les serveurs 4 ou 5. La référence secondaire possède comme argument la référence initiale.

A l'instant t5, la liste secondaire L2 est transmise au terminal utilisateur 1. A la lecture par exemple d'un résumé du document D1, page 42 du site hébergé par le serveur 4, l'utilisateur clique sur la référence associée afin d'accéder, pense-t-il, directement au document D1 (traits pointillés). En fait, le terminal utilisateur envoie une requête de chargement de document vers le serveur intermédiaire 2.

A l'instant t6, le serveur intermédiaire 2 se voyant notifier le chargement du document D2 décrypte le lien secondaire URL' et reconstruit le lien initial URL correspondant.

A l'instant t7, le serveur intermédiaire 2 émet vers le terminal utilisateur 1 une notification de re-direction avec le lien initial URL, par exemple vers le serveur 4. Parallèlement, le serveur intermédiaire 2 pointe sur le serveur 4 et requiert le chargement du document D1.

A l'instant t7, le terminal utilisateur 1 ayant reçu une notification de re-direction pointe directement vers le serveur 4 et émet une requête pour charger le document D1.

A l'instant t8, le serveur 4 émet le contenu du document D1 en direction du serveur intermédiaire 2, mais également en direction du terminal utilisateur 1.

Ainsi, à l'instant t9, l'utilisateur voit s'afficher le document demandé D1 sur l'écran de son terminal et peut prendre connaissance du contenu de ce document D1. Parallèlement, le terminal intermédiaire 2 télécharge le contenu du document D1, analyse le contenu textuel du document D1 qui est effectivement accédé par l'utilisateur et construit une recommandation courante d'indices.

Après avoir pris connaissance du contenu du document D1, l'utilisateur souhaitant poursuivre sa recherche d'informations revient à l'instant t10 sur la page du deuxième type présentant la liste secondaire L2. Le retour vers la page de résultat n'a pas à être indiqué à l'ordinateur intermédiaire 2. En revanche, si la page de résultat comporte également un cadre pour formuler une requête, la recommandation évaluée lors de l'accès au document D1 est affichée dans un cadre de recommandation à proximité du cadre pour formuler une requête. Le rafraîchissement du cadre de recommandation est forcé pour que lorsque l'utilisateur revient sur la page de résultat, qui est par exemple en mémoire tampon sur le terminal utilisateur 1, le cadre de recommandation comporte effectivement la recommandation actualisée.

Une deuxième référence de la liste secondaire L2 donne le résumé de la page 51 du deuxième site (document D2). A la lecture de cette information, l'utilisateur souhaite accéder à document D2. Il clique sur le lien URL' correspondant.

A l'instant t11, une requête de demande du document D2 est donc émise en direction du terminal intermédiaire 2. Celui-ci, qui se voit notifier le chargement d'une page par l'utilisateur à nouveau identifié, fait transcrit le lien URL' en un lien initial URL. Une notification de re-direction avec le lien URL est envoyée vers le terminal utilisateur 1 et, parallèlement, le serveur intermédiaire 2 pointe en direction du serveur 5 afin de demander le chargement du document 51.

A l'instant t12, le terminal utilisateur 1 recevant une notification de re-direction pointe vers le serveur 5 et demande le chargement du document D2 correspondant à la page 51.

A l'instant t13, le serveur 5 émet le document D2 à la fois vers le terminal utilisateur 1 et le serveur intermédiaire 2.

A l'instant t14, le contenu du document D2 s'affiche sur l'écran du terminal utilisateur 1, permettant à l'utilisateur de prendre connaissance du contenu. Le document D2 est effectivement accédé par l'utilisateur. En même temps, le serveur intermédiaire 2 analyse le contenu textuel du document D1 et du document D2 pour construire une recommandation courante d'indices.

En t15, l'utilisateur ayant pris connaissance du contenu du document D2 revient sur la page de formulation de requête, page du premier type, afin de reformuler sa requête pour la réalisation d'une nouvelle itération dans le processus de recherche d'informations. Lorsqu'il revient sur cette page de requête, le serveur intermédiaire 2 propose la recommandation courante. Ces recommandations permettent à l'utilisateur de reformuler sa requête avec des termes considérés comme pertinents.

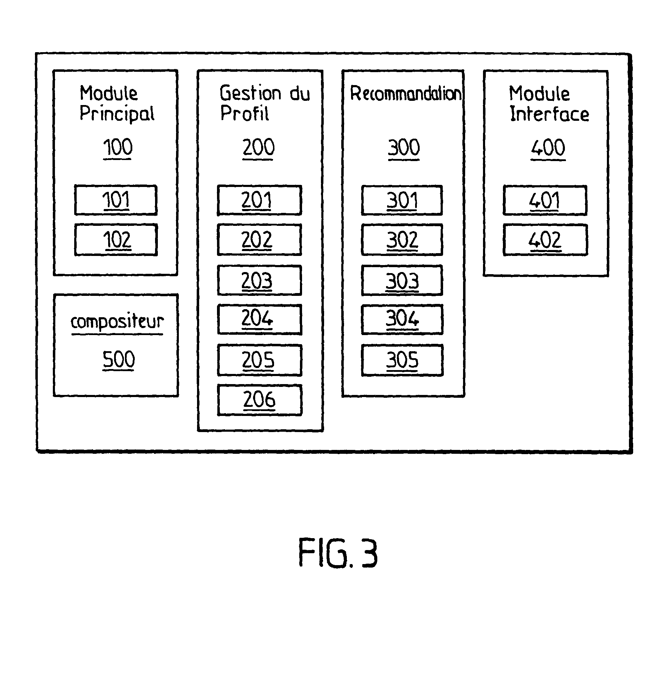

La figure 3 représente de manière schématique le programme exécuté par le serveur intermédiaire 2 pour mettre en oeuvre le procédé selon l'invention.

Ce programme comporte un module principal 100 constitué des sous-modules 101 et 102, un module de gestion de profil 200 comportant une pluralité de modules 201 à 206, un module de recommandation 300 constitué des sous-modules 301 à 305. Le programme comporte un module interface 400 comportant deux sous-modules 401 et 402 et un compositeur de requête 500.

Le profil d'un utilisateur est un ensemble de variables relatant le comportement au cours d'une session de recherche d'un utilisateur identifié. Un utilisateur est par exemple identifié par l'adresse IP du terminal utilisateur 1. A chaque événement, requête vers le SRI 3 ou demande de chargement d'un document, généré par le terminal utilisateur 1 en direction du serveur intermédiaire 2, cet identifiant ID est passé en paramètre de la requête. Ceci permet au serveur intermédiaire 2 de reconnaître l'utilisateur et de stocker dans le profil les informations pertinentes permettant de l'aider dans sa recherche d'information.

Le module de gestion de profil 200 gère toutes les opérations concernant les données d'un utilisateur. Les instructions de lecture /écriture dans le profil de l'utilisateur sont appelées par les autres modules du logiciel selon l'invention.

Lorsque le serveur intermédiaire 2 reçoit un identifiant ID, il cherche dans la base de données qui lui est associée si un profil P correspond à cet identifiant.

Si aucun profil n'existe, le module 206 d'initialisation réserve un volume dans l'espace mémoire du terminal 2. En revanche, si un profil P correspondant à l'identifiant ID est trouvé dans la base de données, les données du profil P sont chargées dans l'espace mémoire du serveur 2.

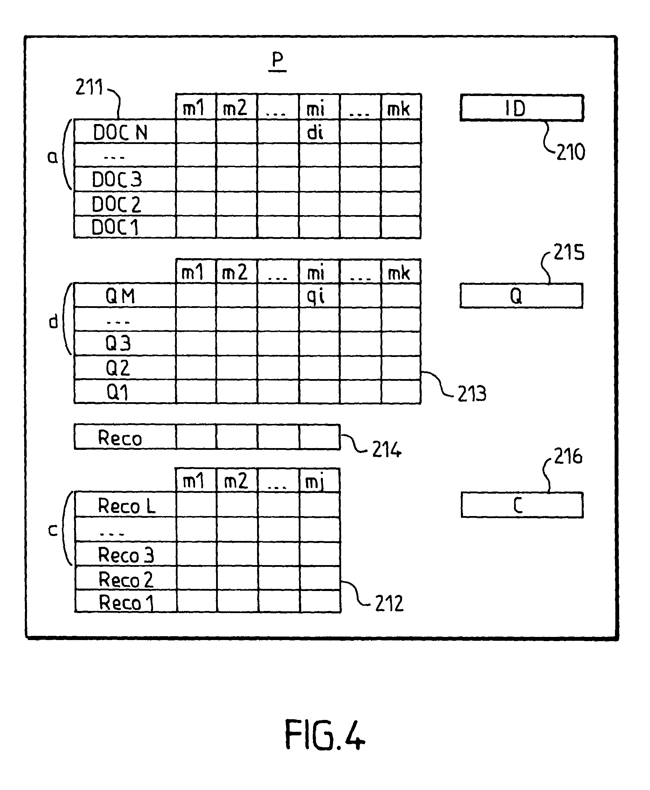

La figure 4 représente de manière schématique l'ensemble des données associées au profil P d'un utilisateur. Le profil P comporte la valeur de l'identifiant ID dans un volume 210 de la mémoire.

Le tableau 211 forme un ensemble de documents constitué par les N derniers documents effectivement accédés par l'utilisateur. Chacun des documents accédés constitue une ligne de tableau de documents. Les documents sont sous forme vectorisée : seuls les mots "pertinents" ont été retenus. Le nombre de rangées K du tableau 211 est fixe et correspond à un lexique : il s'agit de l'ensemble des mots pertinents des documents accédés. La coordonnée $d_i$ du document $DOC_N$ correspond à la fréquence d'occurrence du mot $m_i$ dans ce document. Les documents sont empilés les uns au-dessus des autres dans l'ordre chronologique d'accès à ces documents par l'utilisateur. En conséquence, le document $DOC_N$ est le dernier document accédé par l'utilisateur.

Le tableau 213 constitue un ensemble de requêtes constitué par les M dernières requêtes effectuées par l'utilisateur. Les requêtes sont également enregistrées sous forme vectorisées. La coordonnée $q_i$ de la requête $Q_M$ est la fréquence d'apparition du mot $m_i$ dans cette requête. Typiquement, $q_i$ est un nombre binaire normalisé au nombre de mots de la requête. Ce nombre binaire vaut 1 si le mot $m_i$ apparaît effectivement. Ce nombre binaire valant 0 si le mot mi n'apparaît pas. Le tableau 213 comporte également K lignes correspondant au même lexique que celui du tableau 211.

Le profil P comporte un tableau 212 formant un ensemble de recommandation comportant les L dernières recommandations faites à l'utilisateur. Une fois encore, les recommandations sont ordonnées dans le tableau dans l'ordre chronologique de telle sorte que la recommandation $Reco_L$ soit la dernière recommandation faite à l'utilisateur. Le nombre de lignes du tableau 212 correspond au nombre maximum de termes j que la recommandation peut comporter. Ce nombre maximum de termes j est un paramètre prédéfini.

Le profil P comporte également la recommandation courante Reco dans un volume mémoire 214. La recommandation courante Reco est une suite de mots comportant au plus j mots. Dans la suite, les mots pertinents retenus pour constituer une recommandation sont appelés des indices. Les indices sont présentés à l'utilisateur pour l'aider à reformuler sa requête. Le profil P comporte la requête courante Q dans un volume mémoire 215. La requête courante Q est enregistrée telle qu'elle, i.e. elle n'est pas sous forme vectorielle. Enfin le profil P comporte l'état courant du compositeur C dans un volume mémoire 216.

En revenant à la figure 3, les sous-modules du module de gestion de profil 200 possèdent les fonctions suivantes :

- Le sous-module 205 permet de transformer soit un document, soit une requête en un vecteur. Il retient les mots pertinents du contenu textuel du document ou de la requête, c'est-à-dire les mots n'appartenant pas à une liste d'arrêt prédéterminée. La liste d'arrêt est une sorte de dictionnaire des termes qui ne possèdent pas de sens en eux-mêmes. Puis la fréquence d'occurrence d'un mot pertinent est prise comme coordonnée du vecteur correspondant. L'ensemble des mots pertinents relevés forme le lexique.
- Le sous-module 201 prend en charge l'ajout dans le tableau 211 d'un vecteur document correspondant à un document vectorisé. Il s'agit d'empiler le vecteur document au sommet du tableau 211.
- Le sous-module 202 prend en charge l'ajout d'une nouvelle requête dans le profil :

  o Il écrit "telle quelle" la requête dans le volume mémoire 215 en tant que requête courante Q ;
  o Il empile la requête dans le tableau 213. Pour ce faire, le module 202 lit le contenu du volume mémoire 215 contenant la requête courante Q. La requête courante Q étant écrite telle quelle, le module 202 fait appel au sous-module 205 pour transformer la requête courante Q en un vecteur requête. Puis le sous-module 202 empile le vecteur requête correspondant au sommet du tableau 213.

- Le sous-module 203 prend en charge la réinitialisation du profil. Ce sous-module peut, par exemple, être exécuté avant une nouvelle session de recherche d'informations. Lors de l'exécution du sous-module 203, les opérations suivantes sont effectuées : la requête courante Q est sauvegardée dans une variable temporaire de requête q. Puis les tableaux 211, 212, 213 sont vidés ainsi que le volume mémoire 214 contenant la recommandation courante Reco. Finalement, la variable temporaire de requête q est vectorisée au moyen du sous-module 205 et le vecteur obtenu est enregistré dans le tableau de requête 213.
- Le sous-module 204 intervient à chaque fois que le volume mémoire 215 est modifié, c'est-à-dire à chaque fois que la requête courante Q est modifiée. L'exécution du sous-module 204 conduit à reconstruire le compositeur C stocké dans le volume mémoire 216. Pour ce faire, le sous-module 204 appelle le module composition 500, comme cela sera décrit plus bas.

Au démarrage du module principal 100, la liste d'arrêt est chargée en mémoire du serveur intermédiaire 2.

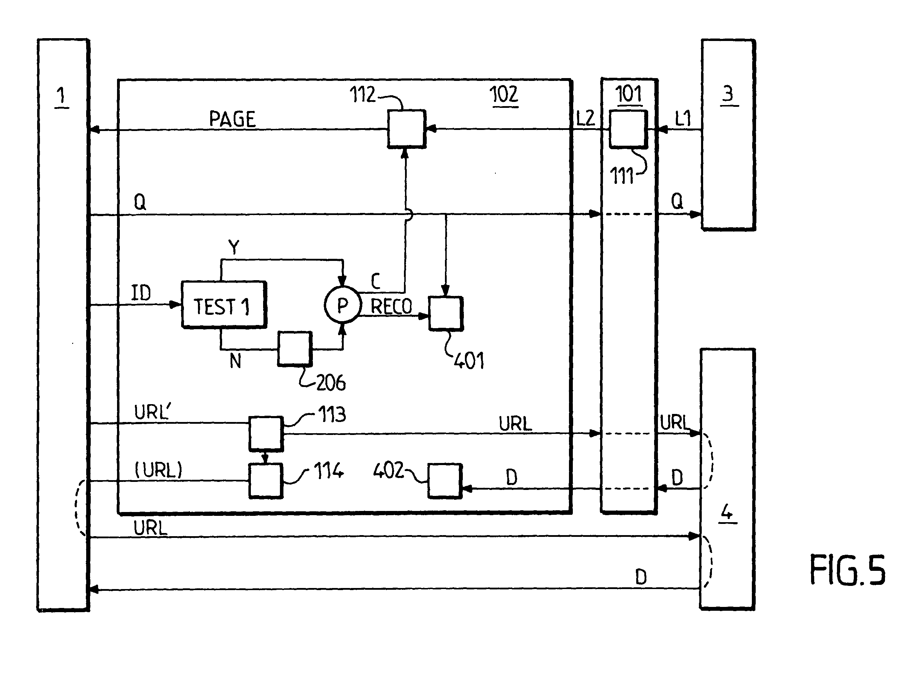

En se référant à la figure 5, le module principal 100 comporte un premier sous-module 101 et un deuxième sous-module 102. Le sous-module 101 est responsable de la communication avec le SRI 3. Le sous-module 101 est capable d'effectuer des requêtes et d'accéder à la liste initiale L1 résultats renvoyée par le SRI 3 comme n'importe quel utilisateur. Le sous-module 101 est toujours invoqué par le sous-module 102.

Le sous-module 102 est responsable des communications avec le terminal utilisateur 1. Ce sous-module est toujours en attente d'un événement produit par le terminal utilisateur 1. Un événement est soit l'émission par le terminal utilisateur d'une requête Q vers le SRI 3, ou l'accès à un document D en cliquant sur un lien URL'. On notera que le document D est uniquement un document dont la référence est présente sur la page de résultat retournée par le SRI. A chaque événement, l'identifiant ID du terminal utilisateur 1 est reçu par le sous-module 102. A l'étape 110, un test TEST1 est effectué. Il s'agit en fait d'une requête sur la base de données des profils pour s'avoir si l'identifiant ID correspond à un profil connu. Si le test TEST1 s'avère positif, le profil P correspondant est chargé dans la mémoire du serveur intermédiaire 2. En revanche, si le test TEST1 s'avère négatif, le sous-module 102 appelle le sous-module 206 d'initialisation d'un profil qui crée un volume P dans l'espace mémoire du serveur 2.

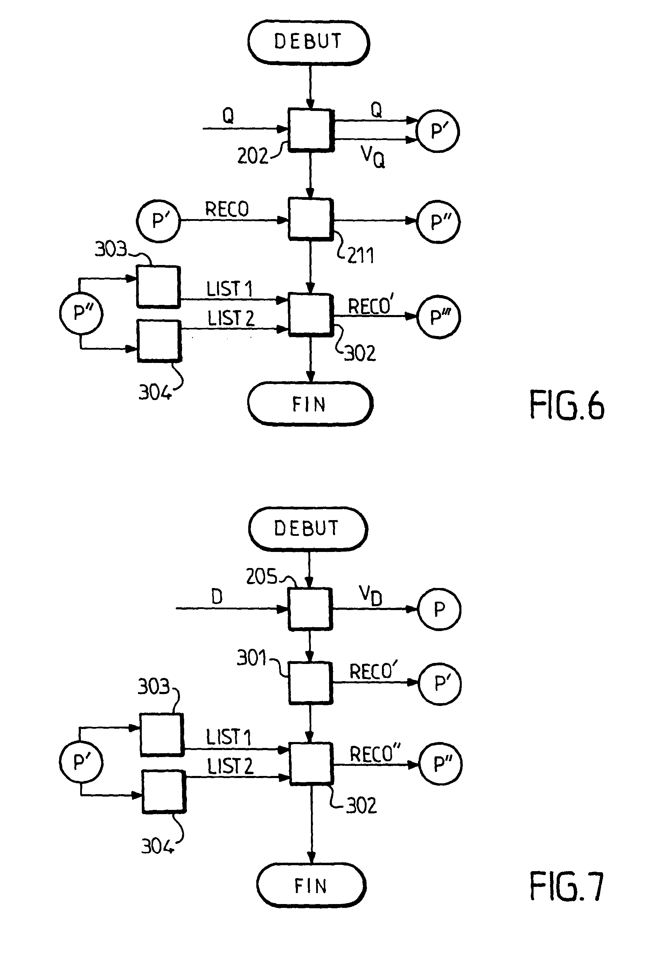

Dans le cas de l'émission d'une requête Q par le terminal utilisateur 1, partie supérieure de la figure 5, les opérations suivantes sont exécutées après identification de l'utilisateur. La recommandation courante Reco est extraite du profil P puis transférées vers le sous-module 401. La requête courante Q est également envoyée vers le sous-module 401. Une description détaillée du sous-module 401 sera faite ci-dessous en rapport avec la figure 6. Le sous-module 102 transmet la requête Q au sous-module 101 qui, lui-même, l'émet en direction du SRI 3. Le module 101 récupère en réponse la liste initiale L1 constituée d'une série de lien URL. Le sous-module 101 recevant la liste initiale L1 transcrit l'ensemble des liens URL afin de produire une liste secondaire L2 comportant de nouveaux liens URL' pointant vers le serveur intermédiaire 2 et possédant comme argument l'URL initiale. Cette étape de transcription est effectuée par le sous-module de transcription 111. Il est à noter que si la liste initiale L1 comporte une référence pointant vers le SRI 3, cette référence est détectée par le module de transcription 111 et ré-écrite d'une façon particulière afin que le serveur intermédiaire 2 sache qu'il ne s'agit pas d'un document, mais d'une requête vers le SRI 3.

Dans le mode de réalisation préféré, la page de résultats comporte également deux cadres. Le premier cadre correspond à une interface permettant de formuler la requête (cadre de requête). Il comporte la requête courante. Le deuxième cadre correspond au cadre de recommandation. Il contient des éléments graphiques et la recommandation courante. L'ensemble de ces informations est présent dans le compositeur C du profil P.

Le deuxième cadre correspond à l'affichage des résultats de la recherche c'est-à-dire la liste secondaire L2. En conséquence, une fois que le module de transcription 111 a généré la liste secondaire L2, un sous-module 112 crée la page résultat PAGE à transmettre au terminal utilisateur 1. Le sous-module 112 construit le premier cadre au moyen de la variable C contenue dans le volume mémoire 216. Le module de création 12 construit le cadre inférieur à partir de la liste secondaire L2. La page résultats PAGE est finalement retournée à l'utilisateur 1.

Lorsque l'utilisateur clique sur un lien URL', il indique qu'il souhaite accéder au contenu du document D correspondant. Le lien URL' pointe vers le serveur 2. Lorsque l'utilisateur clique sur ce lien, une demande de chargement d'un document est émise vers le serveur 2. Lorsque ce dernier reçoit la demande de chargement du document D, après identification de l'utilisateur, un module de transcription inverse 113, partie inférieure de la figure 5, transforme l'URL' en l'URL cible initiale. Deux opérations se passent alors simultanément :

- D'abord le sous-module 102 transmet l'URL initiale au sous-module 101 qui émet une demande de chargement de document en direction du serveur correspondant, par exemple le serveur 4. En réponse à cette demande provenant du serveur 2, le serveur 4 transmet le document D demandé vers le sous-module 101. Ce dernier transmet le document D au sous-module 402. Le sous-module 402 sera décrit en détail ci-dessous en référence à la figure 7 ; et,
- Parallèlement, le module de transcription inverse 213 transmet l'URL à un module de redirection 114. Le module 114 construit une notification de re-direction qui est émise vers l'utilisateur 1. Lors de la réception de cette notification de re-direction, le logiciel de navigation exécuté sur le terminal utilisateur 1 émet une nouvelle demande de chargement du document D mais en direction du serveur 4. Lorsque le serveur 4 reçoit de la part du terminal utilisateur 1 une demande de chargement de document, il émet le document correspondant en direction du terminal 1.

En se reportant à la figure 6, le fonctionnement du sous-module 401 va être décrit en détail. Lorsque le sous-module 401 est invoqué, il lance le sous-module 202 en lui passant la nouvelle requête Q émise par l'utilisateur afin d'écrire cette dernière en tant que requête courante dans le profil P. Le sous-module 202 invoque également le sous-module 205 pour transformer la requête courante Q en un vecteur requête $V_Q$ et pour empiler ce dernier dans le tableau 213. Une fois que le sous-module 202 a été exécuté, le sous-module 401 invoque le sous-module 211 ajoutant la recommandation courante Reco de l'espace mémoire 214 du profil P dans le tableau 212 des recommandations. Il s'agit simplement d'empiler la ligne d'indices que constitue la recommandation courante Reco au sommet du tableau 212. Finalement le sous-module 401 fait appel au sous-module 302.

Sur la figure 7, le sous-module 402 est représenté en détail de manière schématique. Lorsqu'un nouveau document D est passé au sous-module 402, celui-ci invoque le module 205 afin de le transformer le document accédé D en un vecteur document $V_D$. Le vecteur document est ajouté au profil (sous-module 201). Après cette opération, le sous-module 402 fait appel successivement aux sous-modules 301, puis 302 qui vont maintenant être décrits.

Le module de recommandation 300 intervient pour la détermination de la recommandation comportant les indices (termes ou mots pertinents ou l'équivalent) à recommander à l'utilisateur pour reformuler sa requête. Le module de recommandation 300 est donc chargé de mettre à jour la recommandation courante Reco du volume mémoire 214 du profil P. Une mise à jour peut intervenir lors d'une nouvelle requête ou lors de l'accès à un document.

On rappellera que toutes les opérations de lecture et d'écriture de données du profil sont effectuées via le module de gestion de profil 200. Le module de recommandation 300 peut être scindé en cinq sous-modules, comme représenté schématiquement à la figure 3.

Le sous-module 303 construit une liste d'indices usités List1. Ces termes sont à exclure de la recommandation qui va être faite à l'utilisateur car ces termes sont utilisés. Pour déterminer cette liste List1, le sous-module 303 sélectionne les d dernières requêtes du tableau des requêtes 213 du profil P. En effet, il n'est pas nécessaire de recommander un terme à l'utilisateur si ce terme est présent dans les requêtes qu'il a faites lors des itérations précédentes. Par exemple, le sous-module 303 prend l'ensemble des termes constitué de la réunion des termes des deux dernières requêtes du tableau 213. Il s'agit des requêtes $Q_M$ et $Q_{M-1}$.

Le sous-module 304 permet de construire une liste d'indices inusités List2. La liste d'indices inusités List2 est élaborée par sélection des c dernières recommandations du tableau des recommandations 212 du profil P. En effet, il s'agit de tenir compte des termes des recommandations qui ont été faits dans le passé et que l'utilisateur a choisi de ne pas utiliser. Pour cela, le sous-module 304 effectue la succession d'opérations suivantes :

- dans un premier temps, il s'agit de sélectionner les c dernières recommandations du tableau 212. Le nombre c étant un paramètre prédéterminé ;
- pour chacun des indices de l'ensemble des recommandations sélectionnées, il s'agit de calculer une troisième fréquence F3 correspondant à la fréquence d'occurrences dudit indice dans l'ensemble des recommandations sélectionnées. Il est à noter que, puisque la liste des indices usités List1 a été construite à partir des requêtes faites par l'utilisateur, les recommandations du tableau 212 ne comportent pas les termes des requêtes. En conséquence, une fréquence élevée d'apparition d'un terme dans les recommandations sélectionnées signifie que ce terme n'a pas été pris en compte par l'utilisateur;

- l'opération suivante consiste donc à ne plus proposer les termes dont la fréquence d'apparition est supérieure à un seuil prédéterminé, par exemple de 50 %.

En revenant sur la figure 6, le sous-module 302 filtre les indices de la recommandation courante Reco au moyen des nouvelles listes d'indices usités Liste1 et inusités List2 qui viennent d'être modifiées par la nouvelle requête courant Q. Une nouvelle recommandation courante Reco' est générée et mémorisée dans le profil P. Le sous-module 401 prend alors fin.

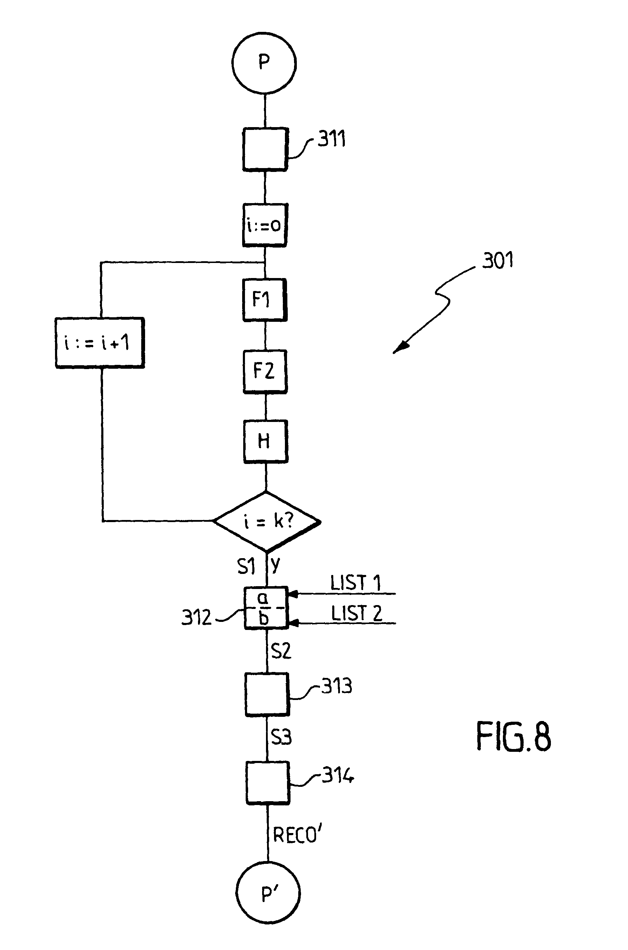

En revenant sur la figure 7, le sous-module 301 invoqué par le sous-module 402 détermine une recommandation intermédiaire d'indices Reco' à partir de l'analyse du contenu textuel des a documents sélectionnés dans l'ensemble des documents accédés qui vient d'être modifié par l'ajout du nouveau document accédé D. Par exemple, les trois derniers documents sont sélectionnés pour la détermination des indices de la nouvelle recommandation. Cette étape de création d'une recommandation intermédiaire d'indices sera décrite ci-dessous en référence à la figure 8.

Le sous-module 302 est ensuite invoqué. Il filtre la recommandation intermédiaire d'indices Reco' au moyen des nouvelles listes d'indices usités List1 et inusités List2. Une nouvelle recommandation courante Reco" est générée et mémorisée dans le profil P. Le sous-module 402 prend alors fin.

A la figure 8, le sous-module 301 est représenté en détail. Le sous-module 301 débute par une étape 311 de sélection des a derniers documents accédés. Ce nombre a est un paramètre prédéterminé. Il s'agit de faire porter l'analyse textuelle sur un ensemble de documents sélectionnés parmi les documents effectivement accédés par l'utilisateur. Ces documents sélectionnés correspondent aux derniers documents chronologiquement accédés par l'utilisateur.

Puis le sous-module 301 entre dans une boucle 312 indexée par l'entier i. Cette boucle permet de calculer un poids pour chacun des mots mi du lexique :

- Pour chaque mot $m_i$ du lexique, une première fréquence F1 est calculée. Cette première fréquence F1 correspond au nombre de documents sélectionnés dans lesquels le mot $m_i$ apparaît divisé par le nombre total de documents sélectionnés ;
- Puis on calcule une deuxième fréquence F2 pour chacun des mots $m_i$. On rappelle que la coordonnée $d_i$ d'un document vectorisé correspond à la fréquence d'occurrence du mot $m_i$ dans ce document. La deuxième fréquence F2 est calculée en faisant la somme sur les documents sélectionnés des occurrences du mot $m_i$;
- Finalement, le poids H du mot mi est calculé par la formule :

$$H = F1^2 \times F2.$$

Ceci n'est qu'un exemple du calcul d'un poids et d'autres fonctions pourraient être utilisées pour définir un critère quantitatif de classement des différents mots pertinents du lexique. Une fois que le poids H de chacun des mots $m_i$ du lexique a été calculé, on obtient une première liste courante d'indices S1.

A l'étape 312, on soustrait de cette première liste d'indices S1 la liste List1 des indices usités provenant des requêtes antérieures (étape élémentaire 212a) ainsi que la liste List2 des indices inusités provenant des recommandations antérieures (étape élémentaire 312b), de manière à obtenir une deuxième liste courante d'indices S2.

A l'étape 313, la deuxième liste d'indices S2 est ordonnée selon le poids des mots $m_i$ pour obtenir une liste courante d'indices S3 qui est ordonnée.

A l'étape 314, seuls les j éléments de la liste S3 ordonnée sont retenus pour constituer la nouvelle recommandation courante Reco'. Le nombre j de termes retenus correspond à un paramètre prédéfini.

Il est à noter que le module 301 se termine par l'inscription dans le profil P de la recommandation Reco'. Mais cette modification du profil est intermédiare car l'exécution du sous-module 301 est toujours immédiatement suivie de l'exécution du sous-module 302.

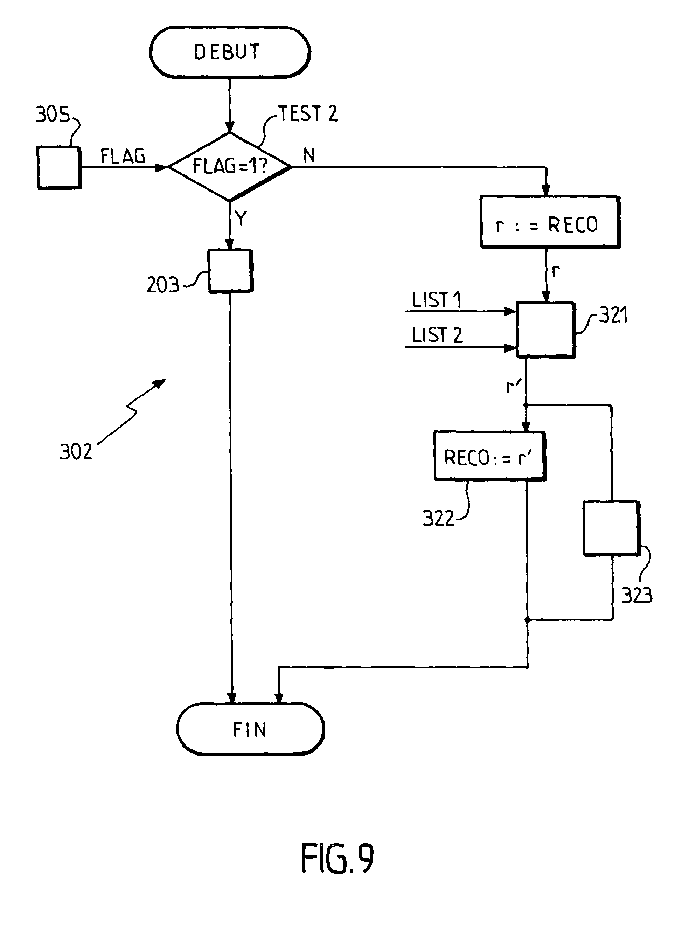

Le sous-module 302 est représenté à la figure 9 et va maintenant être décrit en détail. Le sous-module 302 débute par un test TEST2 consistant à comparer à 1 l'état d'un paramètre FLAG généré par le sous-module 305. On précise que le sous-module 305 détermine s'il y a besoin oui ou non d'une réinitialisation du profil : si il n'y a pas besoin de réinitialisation, le sous-module 305 affecte la valeur 0 au paramètre FLAG ; en revanche si il y a besoin d'une réinitialisation, le sous-module 305 affecte la valeur 1 au paramètre.

S'il y a besoin d'une réinitialisation, le sous-module 302 lance le sous-module 203 de réinitialisation du profil. A la fin de l'exécution du sous-module 203, on sort du sous-module 302.

En revanche, s'il n'y a pas besoin de réinitialisation, les opérations suivantes sont exécutées :

- Le contenu du volume mémoire 214 Reco est copié dans une liste temporaire r ;
- A l'étape 321, les listes d'indices usités List1 et inusités List2 des éléments à retirer sont prises en compte afin d'éliminer les termes déjà présents dans les requêtes ou les recommandations de la liste temporaire r. A la sortie du module 321 de filtrage, on obtient une liste temporaire r' d'indices à recommander ;

- Cette liste temporaire r' permet de mettre à jour le volume mémoire 214 contenant la recommandation courante en copiant le contenu de la liste temporaire r'.

- Cette liste temporaire r' permet de mettre à jour le tableau 212 des dernières recommandations. La liste temporaire r' est empilée sur les recommandations précédentes (étape 323), terminant l'exécution du sous-module 302.

Le sous-module 302 s'appuie sur le profil P pour déterminer la recommander courante Reco. Le sous-module 302 est exécuté lorsque l'utilisateur fait une nouvelle requête ou lorsque l'utilisateur accède à un document. L'utilisateur peut émettre une nouvelle requête sans pour autant consulter l'un des documents proposés comme résultat. Il s'agit donc de modifier également la recommandation courante dans ce dernier cas.

En se reportant à la figure 5, le module de composition 112 construit une page de résultats dont le cadre supérieur permet à l'utilisateur de reformuler sa requête. Pour ce faire, le module 112 charge les données du volume 216 du profil P de l'utilisateur. Ce volume de données 216 ou compositeur C comporte toutes les données qui vont permettre d'aider l'utilisateur à reformuler sa requête : il y a les termes de la recommandation courante, mais également le contenu de la requête courante, éventuellement des éléments décoratifs de présentation dépendant de l'utilisateur etc. Le module de composition de requête 500 élabore le contenu du compositeur C à chaque fois que des modifications du profil P susceptibles d'affecter le compositeur C sont détectées.

Dans le mode de réalisation actuellement préféré, lorsque la page de résultats s'affiche sur l'écran du terminal utilisateur 1, le premier cadre de composition de requête possède des caractéristiques particulières. En cliquant avec la souris sur l'un des indices de la recommandation affichée à l'écran, l'utilisateur peut ajouter le terme correspondant dans la requête. Si la négation du terme est déjà dans le cadre de formulation de la requête, le fait de cliquer sur l'indice remplace la négation du terme par le terme dans la requête. Si le terme est déjà présent dans le cadre de formulation de la requête, le terme est supprimé du cadre. En double cliquant sur un terme de la recommandation, l'utilisateur peut ajouter la négation du terme sélectionné dans le cadre de requête. Si le terme est déjà dans le cadre, le fait de double cliquer sur l'indice remplace le terme par sa négation dans la requête. Si la négation du terme est déjà présente dans de cadre de requête, la négation est supprimée du cadre. Cette présentation permet d'offrir à l'utilisateur une interface facile à utiliser pour reformuler sa requête, et construire des requêtes complexes.

Pour des raisons de clarté de la description, l'invention a été décrite comme un programme exécuté sur une machine distincte du SRI 3 et distincte du terminal utilisateur 1. Il est évident pour l'homme du métier que le procédé selon l'invention peut prendre la forme d'un programme exécuté directement sur le SRI 3 (côté serveur) ou d'un programme exécuté sur le terminal utilisateur 1 (côté client).

La version serveur est très similaire à la version intermédiaire décrite ci-dessus. La différence principale se situe au niveau du sous-module 102 de communication avec le terminal utilisateur. En effet, l'accès aux documents demandés par l'utilisateur peut s'effectuer directement dans la base de données du SRI si le document correspondant existe. En revanche, la construction de la page de résultats s'effectue directement sur le SRI. L'étape de ré-écriture des URL des différents documents pertinents décrite ci-dessus en relation avec la version intermédiaire est donc supprimée de la version serveur. En particulier le sous-module 101 n'a plus de raison d'être dans cette version du logiciel.

S'il est impossible de reprogrammer le navigateur pour qu'il exécute directement les fonctionnalités du programme d'aide à la recherche d'informations décrit ci-dessus, la version client sera constituée d'un programme exécuté sur le terminal utilisateur 1 et interfacé avec le navigateur.

Le navigateur notifie au programme version client lorsque l'utilisateur souhaite accéder à une nouvelle page ayant une adresse URL. Si la variable URL est identifiée comme une demande d'information auprès du SRI 3, les opérations suivantes sont effectuées :

- la variable URL_précédente est affectée à la valeur 1 ;
- la chaîne de caractère de la variable URL est travaillée de manière à extraire la requête courante Q ;
- la requête courant Q ainsi que la recommandation courante Reco du profil sont passés au sous-module 401 qui est alors exécuté comme cela a été décrit ci-dessus.

Si la variable URL n'est pas une demande auprès d'un SRI, alors il s'agit d'une demande de chargement d'une page du troisième type. Il faut s'assurer que l'URL de la page demandée était présente sur la page de résultat. Les opérations suivantes ont lieu :

- On teste la valeur de la variable URL_précédente ; Si cette variable vaut 0 rien ne se passe, si cette variable vaut 1,
- on vérifie que l'URL fait partie de la variable Contenu de la page de résultat ;
- on affecte la valeur 1 à une variable URL_Document ;

- enfin on affecte la valeur 0 à la variable URL_précédente.

Le navigateur notifie également au programme version client lorsque l'utilisateur souhaite afficher le contenu HTML d'une page. Si il s'agit d'afficher une page d'un document (test sur la valeur de la variable URL_Document), les données du profil ainsi que le contenu HTML du document sont passés au sous-module 402 dont l'exécution a été décrite ci-dessus. Si il s'agit d'afficher une page de résultat provenant du SRI 3 (test sur la valeur de la variable URL_précédente), le contenu HTML de la page de résultat est analysé pour construire la variable de contenu donnant toutes les URL des documents de la page de résultat ; puis le compositeur C est extrait du profil et est inséré dans le contenu HTML de la page de résultat à afficher.

On notera que pour effectuer ces modifications du contenu HTML d'une page, il faut que le programme dans sa version client possède des droits de lecture pour accéder au contenu HTML de la page à afficher et d'écriture pour modifier le contenu de la page en insérant le compositeur. Si le navigateur n'autorise le programme client qu'à lire le contenu HTML de la page, le composeur peut prendre la forme d'une barre d'outils supplémentaire dans la fenêtre du navigateur, le contenu de la page à afficher n'étant plus alors à modifier.

Le logiciel dans sa version client présente l'avantage d'accompagner l'utilisateur dans sa navigation. En particulier si l'utilisateur utilise un lien présent sur un premier document D1 pour accéder à un deuxième document D2, le logiciel version client pourrait intégrer ce deuxième document D2 à l'analyse pour déterminer une recommandation. Ceci ne serait pas possible dans les autres versions du logiciel d'aide à la recherche d'information. Pourtant, cette possibilité d'utiliser un tel deuxième document dans l'aide à la reformulation de la requête n'est pas envisagée dans le mode de réalisation préféré.

La description des différents modes de réalisation du procédé selon l'invention sous forme de programme exécuté par un ordinateur a été faite dans le cadre particulier du réseau internet. Il est évident pour l'homme du métier d'adapter les enseignements de la description à d'autres types d'architectures informatiques : réseau supportant d'autres types de protocole, autres outils de recherche d'informations, etc.

Un utilisateur peut avoir plusieurs profils s'il procède à différentes activités de recherche menées parallèlement. En outre, la précision sur le profil d'un utilisateur dépend de la localisation du système d'identification. Dans la version client des paramètres plus précis que l'adresse IP du terminal utilisateur 1 peuvent avantageusement être utilisés. Par exemple, il peut être tenu compte de la fenêtre de navigation dans laquelle s'effectue la recherch e.

Le procédé décrit utilise des indices implicites et l'utilisateur n'a pas à évaluer explicitement la pertinence d'un document accédé.

L'historique de la session de recherche est pris en compte : documents accédés, recommandations faites, requêtes émises.

Enfin, le procédé est dynamisme puisque à chaque événement généré par l'utilisateur conduit potentiellement à une nouvelle recommandation d'indices.

La demanderesse a mis au point un programme d'aide à la recherche d'information, dans sa version intermédiaire et utilisant la méthode décrite ci-dessus, dite méthode "JYLAK", pour tester la convergence d'une session de recherche d'information vers les documents pertinents. Un critère quantitatif de convergence est constitué par le nombre de termes de la recommandation qui sont utilisés dans la reformulation d'une requête. L'utilisation du programme selon l'invention plusieurs mois a permis de mettre en évidence qu'entre 15 et 20 % des termes de la recommandation sont utilisés pour reformuler une requête.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé automatisé d'aide à la recherche d'information mis en oeuvre au cours d'une session de recherche de documents dans le corpus d'un système de recherche d'information (3), ladite session consistant en une pluralité d'itérations, l'itération courante débutant par une émission d'une requête (Q) courante par un utilisateur et la transmission d'une liste initiale courante (L1) d'au moins une référence de documents pertinents par ledit système de recherche d'information en réponse à ladite requête courante, ledit procédé étant **caractérisé en ce qu'**il comporte les étapes consistant à :

   - enregistrer un document (D) référencé dans ladite liste initiale courante et effectivement accédé par l'utilisateur, ledit document accédé étant enregistré dans un ensemble de documents accédés (211) au cours de ladite session ;
   - analyser (301) le contenu textuel d'au moins un document sélectionné automatiquement dans ledit ensemble de documents accédés au cours de la session, pour définir une liste courante d'indices (S1) établis à partir de mots pertinents extraits de ou des documents accédés ;
   - élaborer une recommandation courante d'indices (Reco) à partir de ladite liste courante d'indices ; et,
   - proposer (112) à l'utilisateur ladite recommandation courante pour formuler une nouvelle requête à partir de ladite requête courante.

**2.** Procédé selon la revendication 1, **caractérisé en ce que** l'étape d'analyse (301) du contenu textuel est effectuée sur au plus a documents sélectionnés qui correspondent aux a documents chronologiquement accédés en dernier par l'utilisateur au cours de ladite session, le nombre a étant un paramètre entier prédéterminé.

**3.** Procédé selon la revendication 1 ou la revendication 2, **caractérisé en ce que** l'étape d'analyse du contenu textuel d'au moins un document sélectionné consiste à :

- calculer un poids H pour chacun des mots $(m_i)$ d'un lexique, ledit lexique étant l'ensemble des mots pertinents apparaissant dans ledit ensemble de documents accédés (211); et,
- ordonner (313) ladite liste courante d'indices (S1) selon le poids de chacun desdits mots pertinents la constituant,

l'étape d'élaboration de ladite recommandation courante (Reco) se faisant par sélection des b mots pertinents de poids le plus élevé de ladite liste courante d'indices (S3), le nombre b étant un paramètre entier prédéterminé.

**4.** Procédé selon l'une des revendications 1 à 3, **caractérisé en ce que** ladite étape d'enregistrement d'un document accédé (D) comporte les étapes consistant à :

- filtrer le contenu textuel dudit document accédé (D) en éliminant les termes d'une liste d'arrêt prédéfinie, pour ne retenir que des mots pertinents ;
- associer audit document accédé un vecteur document $(V_D)$ dont les coordonnées correspondent respectivement à la fréquence d'occurrence $(d_i)$ de chaque mot pertinent $(m_i)$ dans ledit document accédé ;
- empiler ledit vecteur document obtenu dans ledit ensemble (211) de documents accédés au cours de ladite session, ledit ensemble ayant alors la forme d'un tableau de documents accédés.

**5.** Procédé selon les revendications 3 et 4 en combinaison, **caractérisé en ce que** le poids H d'un mot pertinent (mi) est calculé en tenant compte d'une première fréquence F1 dudit mot pertinent correspondant au nombre des documents sélectionnés dans lesquels est présent ledit mot pertinent, et d'une deuxième fréquence F2 dudit mot pertinent correspondant à la somme, sur l'ensemble des documents sélectionnés, de la fréquence d'occurrences du mot pertinent.

**6.** Procédé selon la revendication 5, **caractérisé en ce que** ledit poids d'un mot pertinent est calculé selon la formule :

$$H = F_1{}^2 \times F_2.$$

**7.** Procédé selon l'une des revendications 1 à 6, **caractérisé en ce qu'**il comporte les étapes consistant à :

- enregistrer ladite recommandation courante (Reco) dans un tableau de recommandations (212) faites au cours de la session ; et,
- analyser (304) au moins une recommandation sélectionnée dans ledit tableau de recommandations pour produire une liste d'indices inusités (List2),

et **en ce que** l'étape d'élaboration (301) d'une recommandation courante d'indices comporte une première étape élémentaire (312b) de soustraction des mots pertinents appartenant à ladite liste d'indices inusités de ladite liste courante d'indices (S1).

**8.** Procédé selon la revendication 7, **caractérisé en ce que** ladite étape d'analyse (304) d'au moins une recommandation sélectionnée consiste d'abord à calculer, pour chacun des indices de l'ensemble des recommandations sélectionnées, une troisième fréquence F3 correspondant à la fréquence d'occurrences dudit indice dans l'ensemble des recommandations sélectionnées, puis ensuite à supprimer les indices dont la valeur de la troisième fréquence est supérieure à un seuil prédéterminé, de préférence de 50%.

**9.** Procédé selon la revendication 7 ou la revendication 8, **caractérisée en ce que** ladite étape d'analyse (304) consiste à sélectionner au plus les c recommandations (Reco) effectuées chronologiquement en dernier, le nombre c étant un paramètre entier prédéfini.

**10.** Procédé selon l'une des revendications 1 à 9, **caractérisé en ce que** ledit procédé comporte les étapes consistant à :

- enregistrer ladite requête courante (Q) dans un ensemble de requêtes (213) au cours de la session ; et,
- analyser (303) au moins une requête sélectionnée dans ledit ensemble de requêtes pour produire une liste d'indices usités (List1),

et **en ce que** l'étape d'élaboration (301) d'une recommandation courante d'indices (Reco) comporte une deuxième étape élémentaire (312a) de soustraction des mots pertinents appartenant à ladite liste d'indices usités de ladite liste courante (S1).

**11.** Procédé selon la revendication 10, **caractérisé en ce que** ladite étape d'analyse (303) d'au moins une requêtes sélectionnée consiste à sélectionner au plus les d requêtes effectuées chronologiquement en dernier, le nombre d étant un paramètre entier prédéfini.

**12.** Procédé selon la revendication 10 ou la revendication 11, **caractérisé en ce que** ladite étape d'enregistrement de ladite requête courante (Q) consiste à :

- associer à ladite requête (Q) un vecteur requête ($V_Q$) dont chaque coordonnée correspond à la fréquence d'occurrence d'un mot pertinent ($m_i$) dudit lexique dans ladite requête ;
- empiler ledit vecteur requête obtenu dans ledit ensemble de requêtes au cours de ladite session, ledit ensemble ayant alors la forme d'un tableau de requêtes (213).

**13.** Procédé selon l'une des revendications 1 à 12, **caractérisé en ce que** le procédé comporte une étape d'identification de l'utilisateur (Test1) à chaque événement utilisateur parmi l'émission d'une requête courante (Q) et l'accès à un document pertinent (D) de ladite liste courante (L1) de référence.

**14.** Procédé selon l'une quelconque des revendications 1 à 13, **caractérisé en ce que** le processus comporte une étape de détection de fin de session, consistant à compter un nombre de mots communs des e dernières requêtes de l'ensemble de requêtes au cours de la session (213), le nombre e étant un paramètre entier prédéfini, la fin de session correspondant à un nombre de mots communs nul.

**15.** Logiciel d'aide à la recherche d'informations contenant des codes d'instruction propres à être lus et stockés sur un support, lesdits codes étant exécutables par un ordinateur hôte, **caractérisé en ce que** ledit logiciel met en oeuvre un procédé selon l'une quelconque des revendications 1 à 14.

**16.** Logiciel selon la revendication 15, **caractérisé en ce que** ledit logiciel comporte un module de communication apte à échanger des données avec un programme de navigation, ledit ordinateur hôte étant un terminal utilisateur (1) exécutant ledit programme de navigation pour communiquer avec un système de recherche d'information distant (3).

**17.** Logiciel selon la revendication 15, **caractérisé en ce que** ledit logiciel comporte un module de communication apte à échanger des données avec un terminal utilisateur distant (1), ledit ordinateur hôte étant un système de recherche d'information (3).

**18.** Logiciel selon la revendication 15, **caractérisé en ce que** ledit logiciel comporte un premier module de communication apte à échanger des données avec un système de recherche d'information distant (3) et un deuxième module de communication apte à échanger des données avec un terminal utilisateur distant (1), ledit ordinateur hôte étant un serveur intermédiaire.

**19.** Logiciel selon la revendication 18, **caractérisé en ce qu'**il comporte :

- un moyen de transcription (111) des références initiales de la liste initiale qui pointent vers des documents pertinents, ladite liste courante étant émise par ledit système de recherche d'information en réponse à une requête courante émise par ledit terminal utilisateur, pour générer une liste secondaire dont les références secondaires pointent vers ledit ordinateur hôte et possèdent en argument ladite référence initiale ; et,
- un moyen de transcription inverse (113) apte à décrypter la référence secondaire pour en extraire la référence initiale.

**20.** Logiciel selon la revendication 19, **caractérisé en ce qu'**il comporte un moyen de notification de redirection (114) apte, lorsque ledit ordinateur hôte reçoit une demande de chargement d'un document en provenance d'un terminal utilisateur (1) via la référence secondaire d'un dudit document, à rediriger ledit terminal utilisateur vers la référence initiale du document.

**21.** Machine programmée comportant un calculateur et un espace mémoire apte à exécuter les instructions d'un programme stocké dans ledit espace mémoire, **caractérisée en ce qu'**elle est programmée au moyen d'un logiciel d'aide à la recherche d'information selon l'une des revendications 15 à 20.

FIG.1

FIG.2

EP 1 566 749 A1

FIG. 3

P

211

|  | m1 | m2 | ... | mi | ... | mk |
|---|---|---|---|---|---|---|
| DOC N |  |  |  | di |  |  |
| --- |  |  |  |  |  |  |
| DOC 3 |  |  |  |  |  |  |
| DOC 2 |  |  |  |  |  |  |
| DOC 1 |  |  |  |  |  |  |

a

| ID |
|---|

210

|  | m1 | m2 | ... | mi | ... | mk |
|---|---|---|---|---|---|---|
| Q M |  |  |  | qi |  |  |
| --- |  |  |  |  |  |  |
| Q 3 |  |  |  |  |  |  |
| Q 2 |  |  |  |  |  |  |
| Q 1 |  |  |  |  |  |  |

d

215

| Q |
|---|

213

| Reco |  |  |  |  |
|---|---|---|---|---|

214

216

| C |
|---|

|  | m1 | m2 | ... | mj |
|---|---|---|---|---|
| Reco L |  |  |  |  |
| --- |  |  |  |  |
| Reco 3 |  |  |  |  |
| Reco 2 |  |  |  |  |
| Reco 1 |  |  |  |  |

c

212

FIG.4

FIG.5

FIG.6

FIG.7

FIG.8

FIG.9

**Office européen des brevets**

**RAPPORT DE RECHERCHE EUROPEENNE**

Numéro de la demande

EP 04 29 0477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WHITE R W; JOSE J M; RUTHVEN I: "Adapting to Evolving Needs: Evaluating a Behaviour-based Search Interface" PROCEEDINGS OF HCI 2003 DESIGNING FOR SOCIETY, [Online] 2003, pages 125-128, XP002303987 ISBN: 1-897851-10-3 Extrait de l'Internet: URL:http://www.dcs.gla.ac.uk/˜whiter/HCI03 .pdf> [extrait le 2004-11-04] * abrégé * * pages 125-126 * * figures 1,2 * ----- | 1-21 | G06F17/30 |
| X | WHITE R W; JOSE J M; RUTHVEN I: "An approach for implicitly detecting information needs" PROCEEDINGS OF THE TWELFTH INTERNATIONAL CONFERENCE ON INFORMATION AND KNOWLEDGE MANAGEMENT, [Online] 3 novembre 2003 (2003-11-03), pages 504-507, XP002303988 ISBN: 1-58113-723-0 * le document en entier * ----- -/-- | 1-21 | |

DOMAINES TECHNIQUES RECHERCHES (Int.Cl.7)

G06F

Le présent rapport a été établi pour toutes les revendications

| Lieu de la recherche | Date d'achèvement de la recherche | Examinateur |
|---|---|---|
| La Haye | 4 novembre 2004 | Denoual, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P04C02)

**Office européen des brevets**

# RAPPORT DE RECHERCHE EUROPEENNE

Numéro de la demande

EP 04 29 0477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | RUTHVEN I ET AL: "A survey on the use of relevance feedback for information access systems" KNOWLEDGE ENGINEERING REVIEW CAMBRIDGE UNIVERSITY PRESS UK, [Online] vol. 18, no. 2, juin 2003 (2003-06), XP002303989 ISSN: 0269-8889 Extrait de l'Internet: URL:http://www.cs.strath.ac.uk/~ir/papers/ker.pdf> [extrait le 2004-11-04] * page 1 * * pages 5-6 * * pages 22-27 * * pages 32-40 * * pages 42-45 * ----- | 1-21 | |
| X | WHITE R W ET AL: "The use of implicit evidence for relevance feedback in Web retrieval" ADVANCES IN INFORMATION RETRIEVAL. 24TH BCS-IRSG EUROPEAN COLLOQUIUM ON IR RESEARCH. PROCEEDINGS (LECTURE NOTES IN COMPUTER SCIENCE VOL.2291) SPRINGER-VERLAG BERLIN, GERMANY, 25 mars 2002 (2002-03-25), pages 93-109, XP002303990 ISBN: 3-540-43343-0 * pages 93-99 * * page 107 * ----- -/-- | 1-21 | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| La Haye | 4 novembre 2004 | Denoual, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 04 29 0477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LEROY G ET AL: "The use of dynamic contexts to improve casual Internet searching" ACM TRANSACTIONS ON INFORMATION SYSTEMS ACM USA, vol. 21, no. 3, juillet 2003 (2003-07), pages 229-253, XP002303991 ISSN: 1046-8188 * abrégé * * pages 230-237 * ----- | 1-21 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| La Haye | 4 novembre 2004 | Denoual, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)